# EUROPEAN PATENT APPLICATION

(11) **EP 4 258 595 A1**
(43) Date of publication of application: **11.10.2023**
(21) Application number: 20965021.7
(22) Date of filing: 07.12.2020
(51) Int. Cl.: H04L 9/32

(54) **SIGNATURE GENERATION DEVICE, AUTHENTICATION DEVICE, AND PROGRAM**

(71) Applicant: LE-TECHS INC., Tokyo 102-0083 (JP)
(72) Inventor: OGURA Takashi, Tokyo 102-0083 (JP)
(74) Representative: Hoffmann Eitle
(86) International application number: PCT/JP2020/045505
(87) International publication number: WO 2022/123635

(57) **Abstract**

Provided are a signature generation device, an authentication device, and a program that enable easy handling of electronic documents. A signature generation device 1 generates an electronic signature S to be imparted to an electronic document D of a user, and comprises: a document acquisition unit 11 that acquires the electronic document D; an instruction acquisition unit 12 that acquires a signature creation instruction with respect to the acquired electronic document D; a signature generation unit 14 that generates an encoded electronic signature S including time information indicating the signature time and identification information identifying the user; and an imparting unit 15 that imparts, in a visibly recognizable manner, the generated electronic signature S to the electronic document D.

## Description

### Technical Field

The present disclosure relates to a signature device, an authentication device, and a program.

### Background Art

Attempts have been made to use digital data instead of using paper contracts. It is known that, in digital data, an electronic signature is used for the purpose of proving that there has been no alteration. For example, an electronic signature system in which an electronic signature is signed on data to be signed has been proposed (see, e.g., Patent Document 1).

### Citation List

### Patent Document

Patent Document 1: Patent Publication JP 2018-067807 A

### Summary

### Technical Problem

In the electronic signature system in Patent Document 1, a comparison is made between a hash of digital data included in an electronic signature and a hash of the digital data at the time of browsing. When the hashes have different values as a result of the comparison, it is determined that the digital data has been altered. This makes it possible to detect the alteration of the digital data.

Meanwhile, in the electronic signature system in Patent Document 1, the electronic signature is made using a private key, and consequently it is necessary to manage the private key. Therefore, it is necessary to appropriately manage the private key. In addition, since the electronic signature is normally invisible, it cannot be intuitively determined whether or not the electronic signature is used. When an electronic document is opened using a browser or the like, the electronic signature cannot be verified. To decrypt the electronic signature, it is necessary to hold a transmitter-side (producer-side) public key to the electronic document. However, it is difficult to obtain the public key unless the public key is requested.

The present invention has been made in view of the conventional situation described above, and an object thereof is to provide a signature generation device, an authentication device, and a program which allow an electronic signature to be easily handled.

### Solution to Problem

The present invention relates to a signature generation device generating an electronic signature to be imparted to an electronic document of a user, the signature generation device including: a document acquisition unit that acquires the electronic document; an instruction acquisition unit that acquires a signature production instruction for the acquired electronic document; a signature generation unit that generates the coded electronic signature including time information representing a signature time and identification information identifying the user; and an imparting unit that visually recognizably imparts the generated electronic signature to the electronic document.

It is preferable that the signature generation unit generates unique characteristic information on the basis of the acquired production instruction and generates the electronic signature including the generated characteristic information as signature information.

It is preferable that the signature generation device further includes: a calculation unit that calculates a hash of the electronic document; and a holding unit that holds the time information and the hash in a management file that manages the electronic document and, in the management file, the electronic signature including an identifier identifying the management file indicating the time information imparted to the electronic document and the hash of the electronic document is generated.

It is preferable that the signature generation device further includes: a user information acquisition unit that acquires information on the user as user information, and the signature generation unit generates the electronic signature including the acquired user information.

It is preferable that the imparting unit writes a name of the user, which is included in the acquired user information, along with the electronic signature.

It is preferable that the signature generation device further includes: a verification level acquisition unit that acquires a level of an identification status of the user as a verification level, and the signature generation unit varies a color of a code depending on the acquired verification level.

It is preferable that the holding unit holds the management file in an external network.

**The** present invention also relates to an authentication device authenticating an electronic document from an electronic signature generated by the signature generation device described above, the authentication device including: a held information acquisition unit that acquires, on the basis of the electronic signature, the time information and the hash each held in the management file; a hash calculation unit that calculates the hash of the electronic document including the electronic signature; a consistency checking unit that checks consistency between the acquired hash and the calculated hash; and a result output unit that outputs a result of the checking.

The present invention also relates to a program causing a computer to operate as a signature generation device that generates an electronic signature to be given to an electronic document of a user, the program causing the computer to function as: a document acquisition unit that acquires the electronic document; an instruction acquisition unit that acquires a signature production instruction for the acquired electronic document; a signature generation unit that generates the coded electronic signature including time information representing a signature time and identification information identifying the user; and an imparting unit that visually recognizably imparts the generated electronic signature to the electronic document.

The present invention also relates to a program that causes a computer to operate as an authentication device that authenticates an electronic document from an electronic signature generated by the signature generation device described above, the program causing the computer to function as: a held information acquisition unit that acquires, on the basis of the electronic signature, the time information and the hash each held in the management file; a hash calculation unit that calculates the hash of the electronic document including the electronic signature; a consistency checking unit that checks consistency between the acquired hash and the calculated hash; and a result output unit that outputs a result of the checking.

### Advantageous Effects of Invention

The present invention has been achieved in view of the conventional situation described above, and an object thereof is to provide a signature generation device, an authentication device, and a program which allow an electronic document to be easily handled.

### Brief Description of Drawings

Fig. 1 is a schematic diagram illustrating an outline of an electronic signature system using a signature generation device according to a first embodiment of the present invention;
Fig. 2 is a schematic diagram illustrating an electronic document to which an electronic signature generated by the signature generation device according to the first embodiment of the present invention has been added;
Fig. 3 is a block diagram illustrating a configuration of the signature generation device in the first embodiment;
Fig. 4 is a block diagram illustrating the signature generation device according to a second embodiment of the present invention;
Fig. 5 is a flow chart illustrating a flow of an operation when the electronic document is corrected in the signature generation device in the second embodiment; and
Fig. 6 is a block diagram illustrating an authentication device according to a third embodiment of the present invention.

### Description of Embodiments

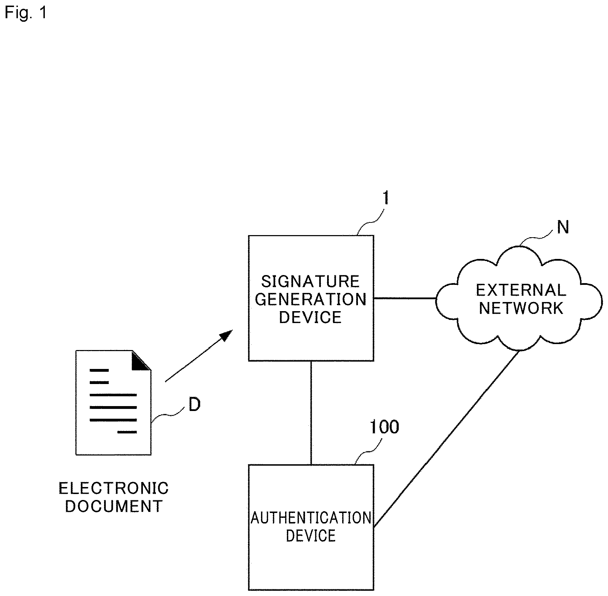

Referring to Figs. 1 to 6, a description will be given of a signature generation device 1, an authentication device 100, and a program according to each of embodiments of the present invention.

First, a description will be given of an outline of the signature generation device 1 in each of the embodiments.

The signature generation device 1 is a device that generates an electronic signature S for an electronic document D such as a contract or the like of a user (e.g., a corporation). In other words, the signature generation device 1 is a device that generates the electronic signature S to be imparted to the electronic document D of the user. For example, the signature generation device 1 visually recognizably imparts the electronic signature S to the electronic document D to thereby produce the electronic document D indicating consent to the electronic document D. In the following embodiment, the signature generation device 1 produces the electronic signature S without using a private key to thereby inhibit leakage of the private key and be able to easily authenticate the electronic document D.

Note that, in the following embodiment, the "electronic document D" refers to an electronically produced sentence among a contract, a cost estimate, an application, an order, a delivery slip, a bill, a receipt, an invoice, a minute, an approval request, and an application form. Meanwhile, the "electronic signature S" refers to processing of electronically performing an act of signing a paper contract or the like on the electronic document D.

The signature generation device 1 also updates the electronic document D determined to be a fixed file to thereby allow the electronic document D to be corrected. Thus, the signature generation device 1 inhibits the electronic document D from being altered, while allowing the correction of the electronic document D to be reflected. Accordingly, the signature generation device 1 distinguishes between the alteration and the correction, and allows the correction to be easily reflected. The signature generation device 1 uses the electronic signature S, a signature time, and a hash in combination to thereby allow the correction, while ensuring a validity of the electronic document D.

**As** illustrated in Fig. 1, the signature generation device 1 is connected to an external network N. The signature generation device 1 produces a management file of the electronic document D to which the electronic signature S has been imparted. The signature generation device 1 holds the produced management file of the electronic document D in the external network N. The signature generation device 1 holds the management file in, e.g., a blockchain. By verifying, for the electronic document D, an identity between the saved management file and the electronic signature S written to the electronic document D, it is possible to confirm that the electronic document D has not been falsified.

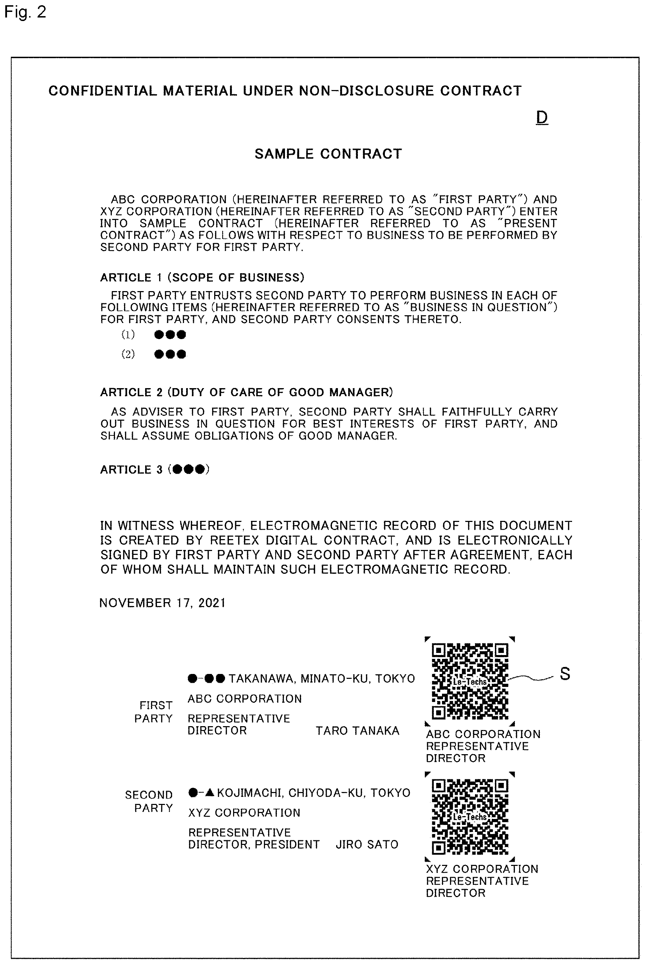

In particular, as illustrated in Fig. 2, the signature generation device 1 according to each of the foregoing embodiments imparts the visually recognizable electronic signature S to the electronic document D. For example, the signature generation device 1 visually recognizably imparts the electronic signatures S individually corresponding to the two users (contractors). For example, the signature generation device 1 imparts, to the electronic document D, the electronic signature S represented by a QR code (registered trademark).

### [First Embodiment]

Next, referring to Figs. 1 to 3, a description will be given of the signature generation device 1 and the program each according to the first embodiment of the present invention. The signature generation device 1 according to the first embodiment is described as the signature generation device 1 that writes the electronic signature S and the signature time to the electronic document D.

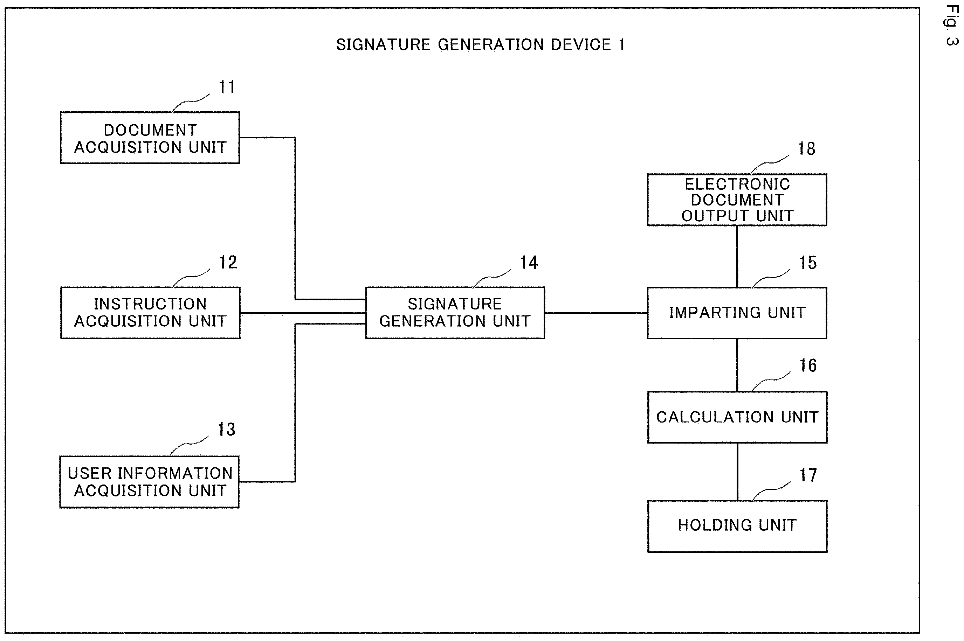

As illustrated in Fig. 3, the signature generation device 1 includes a document acquisition unit 11, an instruction acquisition unit 12, a user information acquisition unit 13, a signature generation unit 14, an imparting unit 15, a calculation unit 16, a holding unit 17, and an electronic document output unit 18.

The document acquisition unit 11 is implemented through, e.g., operation of a CPU. The document acquisition unit 11 acquires the electronic document D. The document acquisition unit 11 acquires electronic data of, e.g., a contract or the like as the electronic document D. For example, the document acquisition unit 11 acquires, as the electronic document D, data obtained by scanning paper data, data produced by using a browser or an application, or the like.

The instruction acquisition unit 12 is implemented through, e.g., the operation of the CPU. The instruction acquisition unit 12 acquires a signature production instruction for the acquired electronic document D to be signed. For example, the instruction acquisition unit 12 acquires an instruction to produce the electronic signature S from the user to be subjected to the contract.

The user information acquisition unit 13 is implemented through, e.g., the operation of the CPU. The user information acquisition unit 13 acquires information on the user as user information. In the present embodiment, the user information acquisition unit 13 acquires a user ID and a username of the user issued in advance. The user information acquisition unit 13 acquires herein the user IDs and the usernames of contractors (users) as the user information. Also, in the present embodiment, when generating the electronic signature S, the user information acquisition unit 13 acquires the user information from each of two corporate users.

The signature generation unit 14 is implemented through, e.g., the operation of the CPU. The signature generation unit 14 generates the coded electronic signature S including time information representing the signature time and identification information identifying the user. For example, the signature generation unit 14 generates a QR code including the time information and the user information (user ID). In addition, the signature generation unit 14 generates unique character information on the basis of the acquired production instruction, and generates the electronic signature S including the generated character information as the signature information. Thus, the signature generation unit 14 generates different character information every time the electronic signature S is generated.

Additionally, the signature generation unit 14 generates the electronic signature S including an identifier identifying the management file indicating the time information imparted to the electronic document D and the hash of the electronic document D. For example, the signature generation unit 14 generates the electronic signature S including an address (URL) indicating a place where the management file is held.

The imparting unit 15 is implemented through, e.g., the operation of the CPU. The imparting unit 15 visually recognizably imparts the generated electronic signature S to the electronic document D. For example, as illustrated in Fig. 2, the imparting unit 15 imparts the electronic signature S produced at a position where the electronic signature S is displayed along with a corporate name and a representative name each corresponding to information on the user written in the electronic document D. For example, the imparting unit 15 writes the electronic signature S at a position in the electronic document D where the electronic signature S is recognizable as the electronic signature S corresponding to the written information on the user. In the present embodiment, the imparting unit 15 writes the name of the user included in the acquired user information along with the electronic signature S. For example, as illustrated in Fig. 2, the imparting unit 15 writes the username below the electronic signature S (QR code) of the corresponding user on a display surface for the electronic document D. After imparting the electronic signatures S to all the users, the imparting unit 15 imparts a time stamp to the electronic document D.

The calculation unit 16 is implemented through, e.g., the operation of the CPU. The calculation unit 16 calculates the hash of the electronic document D. For example, the calculation unit 16 calculates the hash for the electronic document D after the electronic signatures S are imparted to all the users.

The holding unit 17 is implemented through, e.g., the operation of the CPU. The holding unit 17 holds the signature information and the time information in the management file that manages the electronic document D. For example, the holding unit 17 holds the user ID, the username, the signature information, a signature date, and the hash of the electronic document D in the management file different from the electronic document D. Specifically, the holding unit 17 saves the user ID, the username, the signature information, the signature date, and the hash of the electronic document D of each of the contractors in the management file different from the electronic document D. The holding unit 17 holds the management file in the external network N. In the present embodiment, the holding unit 17 holds the management file in the blockchain. For example, the holding unit 17 holds the management file at a position of the address indicated by the identifier.

The electronic document output unit 18 is implemented through, e.g., the operation of the CPU. The electronic document output unit 18 outputs the electronic document D including the written signature information and time information. The electronic document output unit 18 outputs the electronic document D including the signature information and the time information to, e.g., a display device (not shown) such as a display. In addition, the electronic document output unit 18 stores, in a predetermined storage device, the electronic document D to which the electronic signature S has been imparted.

Next, a description will be given of operation of the signature generation device 1.

First, the document acquisition unit 11 acquires the electronic document D. Then, the user information acquisition unit 13 acquires the user information. Then, the instruction acquisition unit 12 acquires the production instruction for the electronic signature S.

Then, the signature generation unit 14 generates the electronic signature S. Then, the imparting unit 15 writes the electronic signature S and the signature time to the electronic document D. Then, the holding unit 17 holds the user ID, the username, the signature information, the signature date, and the hash of the electronic document D of each of the contractors in the management file different from the electronic document D.

Next, a description will be given of the program.
Each of configurations included in the signature generation device 1 can be implemented by hardware, software, or a combination thereof. Being "implemented by software" used herein means being implemented by reading and execution of the program by a computer.

The program is stored using various types of non-transitory computer readable media, and can be supplied to the computer. The non-transitory computer readable media include various types of tangible storage media. Examples of the non-transitory computer readable media include a magnetic recording medium (e.g., a flexible disk, a magnetic tape, or a hard disk drive), a photomagnetic recording medium (e.g., a photomagnetic disk), a CD-ROM (Read Only Memory), a CD-R, a CD-R/W, and a semiconductor memory (e.g., a mask ROM, a PROM (Programmable ROM), an EPROM (Erasable PROM), a flash ROM, or a RAM (random access memory)). A display program may also be supplied to the computer via various types of transitory computer readable media. Examples of the transitory computer readable media include an electric signal, an optical signal, and an electromagnetic wave. The transitory computer readable media can supply the program to the computer via a wired communication path such as an electric wire or an optical fiber or a wireless communication path.

**Thus,** with the signature generation device 1 and the program each according to the present embodiment, the following effects are achieved.
(1) The signature generation device 1 that generates the electronic signature S to be imparted to the electronic document D of a user includes the document acquisition unit 11 that acquires the electronic document D, the instruction acquisition unit 12 that acquires a signature production instruction for the acquired electronic document D, the signature generation unit 14 that generates the coded electronic signature S including time information representing a signature time and identification information identifying the user, and the imparting unit 15 that visually recognizably imparts the generated electronic signature S to the electronic document D.

A program that causes the computer to operate as the signature generation device 1 that generates the electronic signature S to be imparted to the electronic document D of the user causes the computer to function as the document acquisition unit 11 that acquires the electronic document D, the instruction acquisition unit 12 that acquires the signature production instruction for the acquired electronic document D, the signature generation unit 14 that generates the coded electronic signature S including the time information representing the signature time and the identification information identifying the user, and the imparting unit 15 that visually recognizably imparts the generated electronic signature S to the electronic document D.

This allows the electronic signature S to be visually recognizably imparted to the electronic document D. Consequently, it is possible to easily recognize that the electronic signature S has been imparted to the electronic document D.
Additionally, by coding the electronic signature S, it is possible to easily retrieve various information included in the electronic signature S. This allows the electronic signature S to be easily handled.

(3) The signature generation device 1 further includes the calculation unit 16 that calculates the hash of the electronic document D and the holding unit 17 that holds the time information and the hash in the management file that manages the electronic document D and, in the management file, the electronic signature S including the identifier identifying the management file indicating the time information imparted to the electronic document D and the hash of the electronic document D is generated. This allows the management file to be identified from the electronic signature S, and consequently it is possible to facilitate retrieval of the management file. In addition, it is possible to make an easier comparison between the electronic document D and the management file. Therefore, it is possible to easily check the presence or absence of falsification of the electronic document D.

**(4)** The signature generation device 1 further includes the user information acquisition unit 13 that acquires information on the user as the user information, and the signature generation unit 14 generates the electronic signature S including the acquired user information. This allows the electronic document D to be managed on a per user basis.

**(5)** The imparting unit 15 writes a name of the user included in the acquired user information along with the electronic signature S. As a result, it is possible to clarify to which user the coded electronic signature S belongs. In addition, the username written along with the coded electronic signature S allows the code to be handled like a shade, and consequently a visual effect like that of a seal imprinted on paper can be obtained.

(6) The holding unit 17 holds the management file in the external network N. Thus, it is possible to more reliably inhibit the management file from being lost than when the signature generation device 1 holds the management file. Therefore, it is possible to prevent the inability to check the electronic document D against the management file.

### [Second Embodiment]

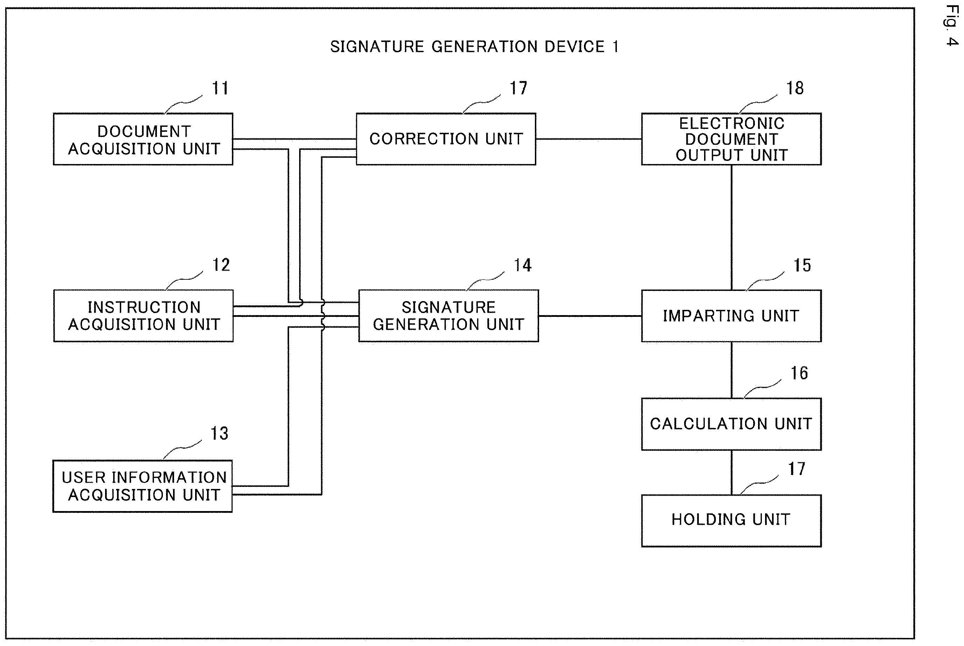

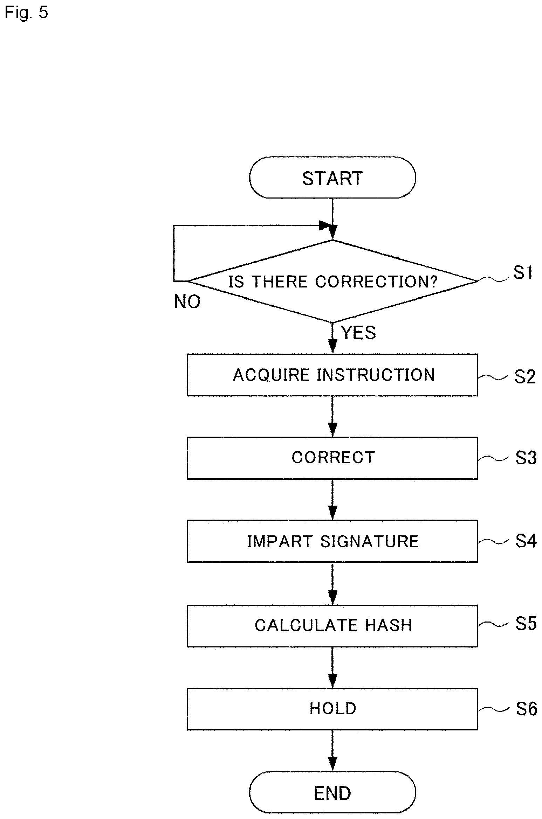

Next, referring to Figs. 4 and 5, a description will be given of the signature generation device 1 and the program each according to the second embodiment of the present invention. In the description of the second embodiment, the same constituent features as those of the embodiment described previously are denoted by the same reference signs, and a description thereof is omitted or simplified. The signature generation device 1 and the program each according to the second embodiment allow correction of the electronic document D to which the signature information and the time stamp have already been issued.

As illustrated in Fig. 4, the signature generation device 1 in the second embodiment is different from that in the first embodiment in terms of further including a correction unit 19. In addition, in the signature generation device 1 in the second embodiment, respective configurations of the document acquisition unit 11, the instruction acquisition unit 12, the signature generation unit 14, the imparting unit 15, the calculation unit 16, and the holding unit 17 are different from those in the first embodiment.

The document acquisition unit 11 acquires the electronic document D in a corrected version.

The instruction acquisition unit 12 acquires, as identification information, information identifying the original electronic document D to be corrected. In addition, the instruction acquisition unit 12 acquires an instruction to correct, according to the electronic document D in the corrected version, the electronic document D identified by the identification information.

The signature generation unit 14 produces the new electronic signature S for the electronic document D in the corrected version. For example, the signature generation unit 14 produces the electronic signature S including new unique character information.

The correction unit 19 is implemented through, e.g., the operation of the CPU. The correction unit 19 corrects a content of the electronic document D. The correction unit 19 corrects the identified electronic document D on the basis of the electronic document D in the corrected version. The correction unit 19 identifies the electronic document D to be corrected by using, e.g., the user ID, the username, the electronic signature S, and the signature date each held in the management file.

The imparting unit 15 writes the newly generated electronic signature S to the electronic document D after the correction. In addition, the imparting unit 15 writes, to the electronic document D after the correction, time information representing the signature time of the newly generated electronic signature S.

The calculation unit 16 calculates the hash of the electronic document D after the correction.

The holding unit 17 holds at least the calculated hash in the management file. For example, the holding unit 17 holds the user ID, the username, the new signature information, the time information, and the hash in the management file that manages the electronic document D. For example, the holding unit 17 ties the management file after the correction to the management file before the correction and holds the management file after the correction.

Next, referring to Fig. 5, a description will be given of the operation of the signature generation device 1.

First, as illustrated in Fig. 5, it is determined whether or not the document acquisition unit 11 has acquired the electronic document D in the corrected version (Step S1). When the document acquisition unit 11 has acquired the electronic document D in the corrected version (YES in Step S1), processing advances to Step S2. Meanwhile, when the electronic document D is not acquired (NO in Step S1), Step S1 is repeated.

In Step S2, the instruction acquisition unit 12 acquires a correction instruction. Then, the correction unit 19 corrects the electronic document D (Step S3). Then, the imparting unit 15 writes the electronic signature S and the signature time to the electronic document D (Step S4). Then, the calculation unit 16 calculates the hash of the corrected electronic document D (Step S5). Then, the holding unit 17 holds, in the management file, the user ID, the username, the signature information, the signature time, and the hash each related to the corrected electronic document D (Step S6). Thus, the processing according to this flow is ended.

Thus, with the signature generation device 1 and the program each according to the present embodiment, the following effects are achieved.

(7) The signature generation device 1 further includes the correction unit 19 that corrects the content of the electronic document D, the document acquisition unit 11 acquires details of the correction of the electronic document D, the imparting unit 15 writes, to the electronic document D after the correction, the signature information and the time information representing the signature time after the correction, the calculation unit 16 calculates the hash of the electronic document D after the correction, and the holding unit 17 holds at least the calculated hash in the management file. Thus, it is possible to ensure an identity between the calculated hash and the electronic document D after the correction. Consequently, even after the correction is made, it is possible to determine the presence or absence of alteration.

### [Third Embodiment]

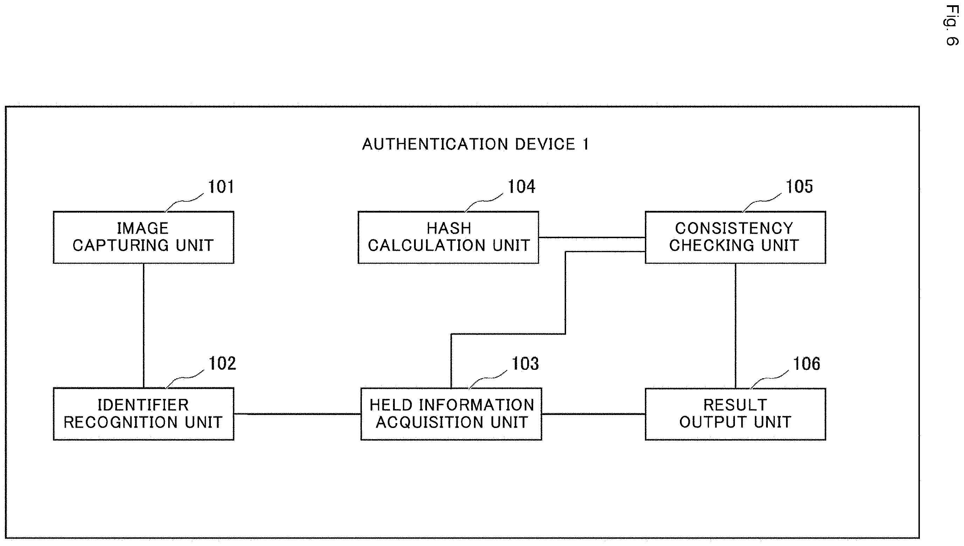

Next, referring to Fig. 6, a description will be given of the authentication device 100 and the program each according to the third embodiment of the present invention. In the description of the third embodiment, the same constituent features as those of each of the embodiments described previously are denoted by the same reference signs, and a description thereof is omitted or simplified.

The authentication device 100 according to the third embodiment is a device that authenticates the electronic document D from the electronic signature S generated by the signature generation device 1 described above. For example, as illustrated in Fig. 1, the authentication device 100 is configured as a device different from the signature generation device 1. For example, the authentication device 100 is a mobile terminal having an image capturing function or the like. The authentication device 100 includes an image capturing unit 101, an identifier recognition unit 102, a held information acquisition unit 103, a hash calculation unit 104, a consistency checking unit 105, and a result output unit 106.

The image capturing unit 101 is a so-called image capturing mechanism including a camera. For example, the image capturing unit 101 captures an image of the electronic signature S imparted to the electronic document D. For example, the image capturing unit 101 captures the image of the electronic signature S included in the electronic document D displayed on a display unit (not shown) of another terminal.

The identifier recognition unit 102 is implemented through, e.g., the operation of the CPU. The identifier recognition unit 102 recognizes an identifier identifying the management file included in the electronic signature S. For example, the identifier recognition unit 102 recognizes an address (URL) indicating a place of the management file, which is included in a QR code.

The held information acquisition unit 103 is implemented through, e.g., the operation of the CPU. The held information acquisition unit 103 acquires, on the basis of the electronic signature S, the hash held in the management file.

The hash calculation unit 104 is implemented through, e.g., the operation of the CPU. The hash calculation unit 104 calculates the hash of the electronic document D including the electronic signature S.

The consistency checking unit 105 is implemented through, e.g., the operation of the CPU. The consistency checking unit 105 checks the consistency between the acquired hash and the calculated hash.

The result output unit 106 is implemented through, e.g., the operation of the CPU. The result output unit 106 outputs a result of the checking.

Next, a description will be given of an operation of the authentication device 100.

First, the image capturing unit 101 captures the image of the electronic signature S imparted to the electronic document D. Then, the identifier recognition unit 102 recognizes the identifier included in the electronic signature S. Then, the held information acquisition unit 103 acquires, as the held file, the hash of the electronic document D from the management file on the basis of the recognized identifier.

Then, the hash calculation unit 104 calculates the hash of the electronic document D including the electronic signature S. Then, the consistency checking unit 105 makes a comparison between the acquired hash and the calculated hash. The consistency checking unit 105 determines whether or not the two hashes are the same. Then, the result output unit 106 outputs the checking result. For example, when the two hashes are the same, the result output unit 106 outputs a signal representing absence of falsification. Meanwhile, when the two hashes are different, the result output unit 106 outputs a signal representing presence of falsification.

Next, a description will be given of the program.

Each of configurations included in the authentication device 100 can be implemented by hardware, software, or a combination thereof. Being "implemented by software" used herein means being implemented by reading and execution of the program by the computer.

The program is stored using various types of non-transitory computer readable media, and can be supplied to the computer. The non-transitory computer readable media include various types of tangible storage media. Examples of the non-transitory computer readable media include a magnetic recording medium (e.g., a flexible disk, a magnetic tape, or a hard disk drive), a photomagnetic recording medium (e.g., a photomagnetic disk), a CD-ROM (Read Only Memory), a CD-R, a CD-R/W, and a semiconductor memory (e.g., a mask ROM, a PROM (Programmable ROM), an EPROM (Erasable PROM), a flash ROM, or a RAM (random access memory)). A display program may also be supplied to the computer via various types of transitory computer readable media. Examples of the transitory computer readable media include an electric signal, an optical signal, and an electromagnetic wave. The transitory computer readable media can supply the program to the computer via a wired communication path such as an electric wire or an optical fiber or a wireless communication path.

Thus, with the authentication device 100 and the program each according to the present embodiment, the following effects are achieved.

(8) The authentication device 100 that authenticates the electronic document D from the electronic signature S generated by the signature generation device 1 described above includes a held information acquisition unit 103 that acquires, on the basis of the electronic signature S, the time information and the hash each held in the management file, a hash calculation unit 104 that calculates the hash of the electronic document D including the electronic signature S, a consistency checking unit 105 that checks consistency between the acquired hash and the calculated hash, and a result output unit 106 that outputs a result of the checking.

A program that causes the computer to operate as the authentication device 100 that authenticates the electronic document D from the electronic signature S generated by the signature generation device 1 described above causes the computer to function as the held information acquisition unit 103 that acquires, on the basis of the electronic signature S, the time information and the hash each held in the management file, the hash calculation unit 104 that calculates the hash of the electronic document D including the electronic signature S, the consistency checking unit 105 that checks consistency between the acquired hash and the calculated hash, and the result output unit 106 that outputs the result of the checking.

Therefore, it is possible to easily check the presence or absence of falsification of the electronic document D.

**While** the description has been given heretofore of each of the preferred embodiments of the signature generation device, the authentication device 100, and the program of the present invention, the present disclosure is not limited to the embodiment described above, and can appropriately be modified.

For example, in the embodiment described above, the signature generation device 1 may also further include, e.g., a verification level acquisition unit (not shown) that acquires a level of an identification status of the user as a verification level. For example, the signature generation device 1 acquires, for each user, the verification level which is among several verification levels including a high verification level corresponding to a case where, for a corporate user, a name of a contact person, an address, a shareholder composition, a face photo, and the like have successfully been verified and a low verification level corresponding to a case where only a certified copy of register has been verified. The signature generation unit 14 may also vary a color of a code depending on the acquired verification level. For example, the signature generation unit 14 may also produce a red code in the case of the highest verification level. The signature generation unit 14 may also produce a blue code in the case of the lowest verification level. By thus varying the color of the code, it is possible to verify, from the code, the identification level of each user. As a result, when a higher identification level is required, it is possible to easily verify the identification level.

In the embodiment described above, the signature generation unit 14 generates the unique character information, but the present disclosure is not limited thereto. When the contract cannot be corrected, it may also be possible that the signature generation unit 14 does not generate the unique character information.

Alternatively, in the embodiment described above, the electronic document output unit 18 may also output the electronic document D to which the electronic signature S has been imparted on paper. The holding unit 17 may also hold, in the management file, details of the contract included in the electronic document D. This allows the held information acquisition unit 103 to acquire, at the time of authentication, the details of the contract from the management file. Through a comparison between the acquired details of the contract and the content of the electronic document D, it is possible to determine the presence or absence of falsification.

Alternatively, in the embodiment described above, it may also be possible to give an instruction to give the electronic signature S with timing different from one user to another. In other words, the signature generation unit 14 may also produce the electronic signature S and the time stamp at a time when instructions are acquired from all the users.

Alternatively, in the embodiment described above, when the original is corrected according to the electronic document D in the corrected version, it may also be possible to directly hold the previous electronic signature S in the electronic document D. Alternatively, the holding unit 17 may also hold the previous electronic signature S in the management file. This allows a correction history to be easily checked.

In the first embodiment described above, the imparting unit 15 may also write, e.g., for a plurality of the users, the signature information and the signature time of each of the users to the electronic document D on the basis of the signature instruction from each of the users. The holding unit 17 may also write the signature information and the signature times on the basis of the signature instructions from all the users, and then hold the user IDs, the usernames, the signature information, the signature times, and the hashes of all the users in the management file.

Alternatively, in the embodiment described above, the imparting unit 15 may also affix the time stamp to the electronic document D in order to confirm the conclusion of the contract and provide a fixed file.

Alternatively, in the third embodiment described above, the hash calculation unit 104 may also acquire the hash calculated in a terminal different from the authentication device 100. For example, the hash calculation unit 104 may also acquire the hash of the electronic document D calculated by another terminal displaying the electronic document D. Alternatively, the authentication device 100 may also acquire the electronic document D to be authenticated. In this case, instead of the image capturing unit 101, the identifier recognition unit 102 may also recognize the identifier of the electronic signature S from the electronic document D.

Alternatively, in the embodiment described above, as illustrated in Fig. 2, the signature generation unit 14 may also impart the username or the like superimposed on the coded electronic signature S.

### Reference Signs List

- 1: Signature generation device
- 11: Document acquisition unit
- 12: Instruction acquisition unit
- 13: User information acquisition unit
- 14: Signature generation unit
- 15: Imparting unit
- 16: Calculation unit
- 17: Holding unit
- 100: Authentication device
- 103: Held information acquisition unit
- 104: Hash calculation unit
- 105: Consistency checking unit
- 106: Result output unit
- D: Electronic document
- N: External Network
- S: Electronic signature

### [TRANSLATION OF TEXT IN DRAWINGS]

[Fig. 1]
   - 1: SIGNATURE GENERATION DEVICE
   - 100: AUTHENTICATION DEVICE
   - D: ELECTRONIC DOCUMENT
   - N: EXTERNAL NETWORK
[Fig. 2]
   CONFIDENTIAL MATERIAL UNDER NON-DISCLOSURE CONTRACT
   SAMPLE CONTRACT
   ABC CORPORATION (HEREINAFTER REFERRED TO AS "FIRST PARTY") AND XYZ CORPORATION (HEREINAFTER REFERRED TO AS "SECOND PARTY") ENTER INTO SAMPLE CONTRACT (HEREINAFTER REFERRED TO AS "PRESENT CONTRACT") AS FOLLOWS WITH RESPECT TO BUSINESS TO BE PERFORMED BY SECOND PARTY FOR FIRST PARTY.
   ARTICLE 1 (SCOPE OF BUSINESS)
   FIRST PARTY ENTRUSTS SECOND PARTY TO PERFORM BUSINESS IN EACH OF FOLLOWING ITEMS (HEREINAFTER REFERRED TO AS "BUSINESS IN QUESTION") FOR FIRST PARTY, AND SECOND PARTY CONSENTS THERETO
   ARTICLE 2 (DUTY OF CARE OF GOOD MANAGER)
   AS ADVISER TO FIRST PARTY, SECOND PARTY SHALL FAITHFULLY CARRY OUT BUSINESS IN QUESTION FOR BEST INTERESTS OF FIRST PARTY, AND SHALL ASSUME OBLIGATIONS OF GOOD MANAGER.
   ARTICLE 3
   IN WITNESS WHEREOF, ELECTROMAGNETIC RECORD OF THIS DOCUMENT IS CREATED BY REETEX DIGITAL CONTRACT, AND IS ELECTRONICALLY SIGNED BY FIRST PARTY AND SECOND PARTY AFTER AGREEMENT, EACH OF WHOM SHALL MAINTAIN SUCH ELECTROMAGNETIC RECORD.
   NOVEMBER 17, 2021
   FIRST PARTY
   TAKANAWA, MINATO-KU, TOKYO
   ABC CORPORATION
   REPRESENTATIVE DIRECTOR
   TARO TANAKA
   SECOND PARTY
   KOJIMACHI, CHIYODA-KU, TOKYO
   XYZ CORPORATION
   REPRESENTATIVE DIRECTOR, PRESIDENT
   JIRO SATO
[Fig. 3]
   SIGNATURE GENERATION DEVICE 1
   - 11: DOCUMENT ACQUISITION UNIT
   - 12: INSTRUCTION ACQUISITION UNIT
   - 13: USER INFORMATION ACQUISITION UNIT
   - 14: SIGNATURE GENERATION UNIT
   - 15: IMPARTING UNIT
   - 16: CALCULATION UNIT
   - 17: HOLDING UNIT
   - 18: ELECTRONIC DOCUMENT OUTPUT UNIT
[Fig. 4]
   SIGNATURE GENERATION DEVICE 1
   - 11: DOCUMENT ACQUISITION UNIT
   - 12: INSTRUCTION ACQUISITION UNIT
   - 13: USER INFORMATION ACQUISITION UNIT
   - 14: SIGNATURE GENERATION UNIT
   - 15: IMPARTING UNIT
   - 16: CALCULATION UNIT
   - 17: HOLDING UNIT
   - 17: CORRECTION UNIT
   - 18: ELECTRONIC DOCUMENT OUTPUT UNIT
[Fig. 5]
   - S1: IS THERE CORRECTION?
   - S2: ACQUIRE INSTRUCTION
   - S3: CORRECT
   - S4: IMPART SIGNATURE
   - S5: CALCULATE HASH
   - S6: HOLD
[Fig. 6]
   AUTHENTICATION DEVICE 1
   - 101: IMAGE CAPTURING UNIT
   - 102: IDENTIFIER RECOGNITION UNIT
   - 103: HELD INFORMATION ACQUISITION UNIT
   - 104: HASH CALCULATION UNIT
   - 105: CONSISTENCY CHECKING UNIT
   - 106: RESULT OUTPUT UNIT

## Claims

1. A signature generation device generating an electronic signature to be imparted to an electronic document of a user, the signature generation device comprising:
a document acquisition unit that acquires the electronic document;
an instruction acquisition unit that acquires a signature production instruction for the acquired electronic document;
a signature generation unit that generates the coded electronic signature including time information representing a signature time and identification information identifying the user; and
an imparting unit that visually recognizably imparts the generated electronic signature to the electronic document.

2. The signature generation device according to claim 1, wherein the signature generation unit generates unique characteristic information on the basis of the acquired production instruction and generates the electronic signature including the generated characteristic information as signature information.

3. The signature generation device according to claim 1 or 2, further comprising:
a calculation unit that calculates a hash of the electronic document; and
a holding unit that holds the time information and the hash in a management file that manages the electronic document, wherein
in the management file, the electronic signature including an identifier identifying the management file indicating the time information imparted to the electronic document and the hash of the electronic document is generated.

4. The signature generation device according to claim 3, further comprising a user information acquisition unit that acquires information on the user as user information, wherein
the signature generation unit generates the electronic signature including the acquired user information.

5. The signature generation device according to claim 4, wherein the imparting unit writes a name of the user, which is included in the acquired user information, along with the electronic signature.

6. The signature generation device according to any one of claims 3 to 5, further comprising a verification level acquisition unit that acquires a level of an identification status of the user as a verification level, wherein
the signature generation unit varies a color of a code depending on the acquired verification level.

7. The signature generation device according to claim 3, wherein the holding unit holds the management file in an external network.

8. An authentication device authenticating an electronic document from an electronic signature generated by the signature generation device according to any one of claims 3 to 7, the authentication device comprising:
a held information acquisition unit that acquires, on the basis of the electronic signature, the time information and the hash each held in the management file;
a hash calculation unit that calculates the hash of the electronic document including the electronic signature;
a consistency checking unit that checks consistency between the acquired hash and the calculated hash; and
a result output unit that outputs a result of the checking.

9. A program causing a computer to operate as a signature generation device that generates an electronic signature to be imparted to an electronic document of a user, the program causing the computer to function as:
a document acquisition unit that acquires the electronic document;
an instruction acquisition unit that acquires a signature production instruction for the acquired electronic document;
a signature generation unit that generates the coded electronic signature including time information representing a signature time and identification information identifying the user; and
an imparting unit that visually recognizably imparts the generated electronic signature to the electronic document.

10. A program that causes a computer to operate as an authentication device that authenticates an electronic document from an electronic signature generated by the signature generation device according to any one of claims 3 to 7, the program causing the computer to function as:
a held information acquisition unit that acquires, on the basis of the electronic signature, the time information and the hash each held in the management file;
a hash calculation unit that calculates the hash of the electronic document including the electronic signature;
a consistency checking unit that checks consistency between the acquired hash and the calculated hash; and
a result output unit that outputs a result of the checking.
